# EUROPEAN PATENT APPLICATION

(11) **EP 4 660 626 A1**
(43) Date of publication of application: **10.12.2025**
(21) Application number: 25180785.5
(22) Date of filing: 04.06.2025
(51) Int. Cl.: G01N 29/04, G01N 29/22, G01N 29/265

(54) **ACTUATABLE INSPECTION PROBE FOR NON-DESTRUCTIVE INSPECTION**

(30) Priority: 04.06.2024 US 202418733218
(71) Applicant: RTX Corporation, Farmington, CT 06032 (US)
(72) Inventor: BREAULT, Andrew E., Bolton, 06043 (US); MORTON, Jeffrey T., Manchester, 06040 (US); SOBANSKI, Jon E., Glastonbury, 06033 (US); MULDOON, Marc J., Marlborough, 06447 (US); JONSSON, Ulf J., South Windsor, 06074 (US); GATES, Roger, West Hartford, 06107 (US)
(74) Representative: Dehns

(57) **Abstract**

An inspection method is provided during which a distal end of an inspection probe is inserted into an interior of a powerplant. The inspection probe includes a body and a head pivotally connected to the body. The head includes an actuator, and the head is disposed at the distal end of the inspection probe. The powerplant includes a component within the interior of the powerplant. The head is arranged with the component. The arranging includes pivoting the head relative to the body and abutting the head against a surface of the component. Vibrations in the component are induced using the actuator. A vibratory response in the component excited by the vibrations is measured using a sensor to provide sensor data.

## Description

### BACKGROUND OF THE DISCLOSURE

### 1. Technical Field

This disclosure relates generally to inspection and, more particularly, to non-destructive inspection for internal defects.

### 2. Background Information

Various systems and methods are known in the art for inspecting a component for internal defects. While these known inspection systems and methods have various benefits, there is still room in the art for improvement.

### SUMMARY OF THE DISCLOSURE

According to an aspect of the present disclosure, an inspection method is provided during which a distal end of an inspection probe is inserted into an interior of a powerplant. The inspection probe includes a body and a head pivotally connected to the body. The head includes an actuator, and the head is disposed at the distal end of the inspection probe. The powerplant includes a component within the interior of the powerplant. The head is arranged with the component. The arranging includes pivoting the head relative to the body and abutting the head against a surface of the component. Vibrations in the component are induced using the actuator. A vibratory response in the component excited by the vibrations is measured using a sensor to provide sensor data.

According to another aspect of the present disclosure, an apparatus is provided for inspection of a component. This apparatus includes an inspection probe, and the inspection probe includes a tubular body, a head and an actuation system. The head is disposed at a distal end of the inspection probe and pivotally coupled to the tubular body. The head is configured to pivot between a stowed position and a deployed position where the head is inline with the tubular body when in the stowed position and the head is angularly offset from the tubular body when in the deployed position. The head includes an actuator and a sensor. The actuator is configured to induce vibrations in the component when the head is in the deployed position and the head is abutted against a surface of the component. The sensor is configured to measure a vibratory response in the component excited by the vibrations to provide sensor data. The actuation system is configured to pivot the head between the stowed position and the deployed position.

According to still another aspect of the present disclosure, which the Applicant expressly reserves the right to claim independently, another apparatus is provided for inspection of a component. This apparatus includes an inspection probe, and the inspection probe includes an actuation system, an elongated rigid body and a head disposed at a distal end of the inspection probe. The actuation system includes a control cable and a spring. The control cable is configured to move the head relative to the elongated rigid body from a stowed position to a deployed position where the head is angularly offset from the elongated rigid body. The spring is configured to move the head relative to the elongated rigid body from the deployed position to the stowed position. The head includes a piezoelectric device configured to operatively engage a surface of the component to facilitate the inspection of the component when the head is in the deployed position.

The apparatus may also include a processing system configured to determine a characteristic of the component based on the sensor data.

The head may include a base and an extension. The base may be pivotally coupled to the body. The extension may include the actuator and the sensor. The actuation system may also be configured to translate the extension longitudinally along the base and away from the tubular body when the head is in the deployed position.

The actuation system may include a spring within the inspection probe.

The actuation system may include a control cable operatively coupled to the head.

The actuation system may include a fluid actuator within the inspection probe.

A centerline of the head may be angularly offset from a centerline of the body by an offset angle following the pivoting. The offset angle may be equal to or greater than fifteen degrees.

The centerline of the head may be at least within two degrees of parallel of the centerline of the body during the inserting.

The head may include a base and an extension. The base may be pivotally coupled to the body. The extension may include the actuator. The arranging may also include translating the extension relative to the base to abut the extension against the surface of the component.

The extension may also include the sensor.

The head may also include the sensor.

The actuator may be configured as or otherwise include a piezoelectric device.

The sensor may be configured as or otherwise include a piezoelectric device.

The actuator and the sensor may be configured as discrete devices.

The actuator and the sensor may be integrated into a single transducer.

The arranging may also include preloading the head against the surface of the component.

The inspection method may also include abutting a distal end of the body against the component, or another component within the interior of the powerplant, while a distal end of the head is abutted against the surface of the component.

The inspection method may also include detecting a defect internal to the component using the sensor data.

The inspection method may also include determining a characteristic of the component using the sensor data.

The inspection method may also include, following the measuring, disengaging the head against the surface of the component and pivoting the head into alignment with the body.

The powerplant may be configured as or otherwise include a turbine engine.

The component may be configured as a rotor disk.

The powerplant may be installed with an aircraft during the inserting, the arranging, the inducing and the measuring.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic illustration of a system for inspecting a component of a powerplant.
FIG. 2 is a perspective illustration of a portion of an inspection probe with its probe head in a deployed position.
FIG. 3 is a side illustration of a portion of the inspection probe with its probe head in a stowed position.
FIG. 4 is a side illustration of a portion of the inspection probe with its probe head in the deployed position and engaged with the component.
FIGS. 5A and 5B are partial schematic illustrations of the inspection probe with a piezoelectric actuator and a piezoelectric sensor engaged with the component.
FIG. 6 is a partial schematic illustration of the inspection probe with a piezoelectric transducer engaged with the component.
FIG. 7 is a flow diagram of a method for inspecting a component of a powerplant.
FIGS. 8A and 8B are graphs of various measured resonant signatures compared to a model resonant signature.
FIGS. 9-11 are side cutaway illustrations of a portion of the inspection probe with various extendable probe head arrangements in the deployed position and engaged with the component.
FIG. 12 is a perspective illustration of a portion of another inspection probe with its probe head in a deployed position.

### DETAILED DESCRIPTION

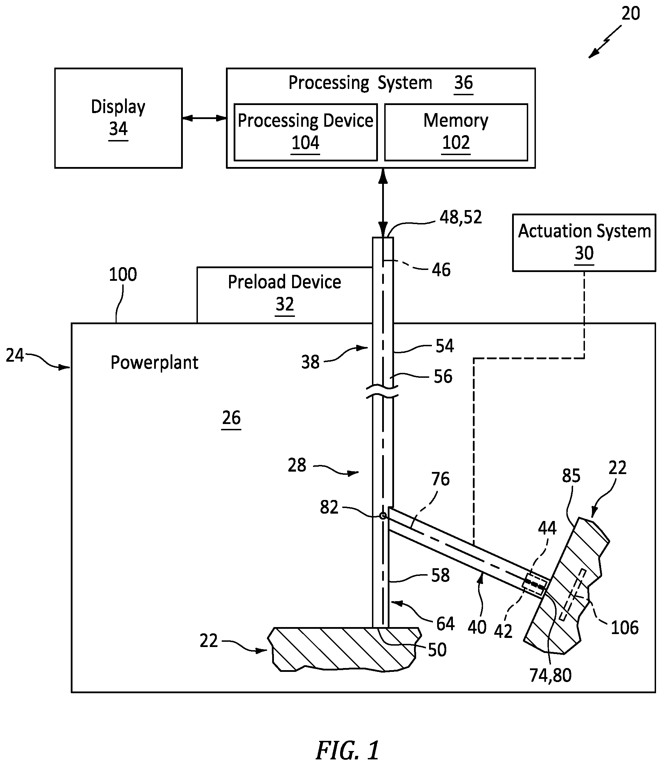

FIG. 1 illustrates a system 20 for non-destructive inspecting a component 22 of a powerplant 24 for an aircraft. The aircraft may be an airplane, a helicopter, a drone (e.g., an unmanned aerial vehicle (UAV)) or any other manned or unmanned aerial vehicle or system. The aircraft powerplant 24 may be configured as, or otherwise included as part of, a propulsion system for the aircraft. The aircraft powerplant 24, for example, may be a turbofan engine, a turbojet engine, a turboprop engine, a turboshaft engine, or any other type of gas turbine engine configured to generate thrust and/or drive rotation of a ducted or open propulsor rotor configured to generate thrust. The aircraft powerplant 24 may alternatively be configured as, or otherwise included as part of, a power generation system for the aircraft. The aircraft powerplant 24, for example, may be an auxiliary power unit (APU) or any other type of gas turbine engine configured to mechanically power operation of an electrical generator. The present disclosure, however, is not limited to such exemplary aircraft powerplants. The inspection systems and methods of the present disclosure, for example, may also be used for inspecting components of other types of internal combustion engines and/or components of various other types of power units; e.g., an electric machine, a hybrid-electric power unit, etc.

The inspection system 20 is configured to facilitate inspection of the powerplant component 22 while that powerplant component 22 remains installed with the aircraft powerplant 24 and, for example, while the aircraft powerplant 24 remains substantially or completely assembled. The powerplant component 22 of FIG. 1, for example, is disposed within an interior 26 (e.g., an enclosed volume, an encased volume, etc.) of the aircraft powerplant 24. The inspection system 20 is also configured to facilitate inspection of the powerplant component 22 while the aircraft powerplant 24 remains onboard the aircraft; e.g., remains installed on wing, on fuselage, in airframe, etc. The inspection of the powerplant component 22 may also be performed using the inspection system 20 while outside of an aircraft hangar and/or a dedicated inspection and/or repair facility; e.g., on a tarmac at an airport between aircraft flights. The inspection of the powerplant component 22 may thereby be performed with a relatively short aircraft downtime and/or a relatively minimal expense. The inspection system 20, of course, may also be used for inspecting the powerplant component 22 installed with the aircraft powerplant 24 when that aircraft powerplant 24 is not installed with the aircraft (e.g., prior to installation with the aircraft or following removal from the aircraft) and/or when the aircraft powerplant 24 is partially disassembled into one or more sub-assemblies.

The powerplant component 22 may be any inspectable (e.g., metal) component within the aircraft powerplant 24. However, for ease of description, the powerplant component 22 may be described below as a rotor disk of a bladed rotor within a gas turbine engine, and the aircraft powerplant 24 may be described below as the gas turbine engine. The rotor disk may be a turbine disk such as a rotor disk in a high pressure turbine (HPT) section or a low pressure turbine (LPT) section of the gas turbine engine. Alternatively, the rotor disk may be a compressor disk such as a rotor disk in a low pressure compressor (LPC) section or a high pressure compressor (HPC) section of the gas turbine engine. The present disclosure, however, is not limited to such exemplary powerplant component configurations. The powerplant component 22, for example, may alternatively be configured as a hub, a shaft or any rotating component within the aircraft powerplant 24.

The inspection system 20 of FIG. 1 includes an actuatable inspection probe 28 and an actuation system 30 (schematically shown in FIG. 1) for actuating movement of one or more components of the inspection probe 28. This inspection system 20 also includes a preload device 32, a display 34 and a processing system 36. Examples of the display 34 include, but are not limited to, a screen, a monitor and/or a touch screen.

The inspection probe 28 includes a body 38, a head 40, a vibration actuator 42 and a vibration sensor 44. Note, while the vibration actuator 42 and the vibration sensor 44 are schematically shown in FIG. 1 as separate elements of the inspection probe 28, it is contemplated the vibration actuator 42 and the vibration sensor 44 may be integrated into a single electromechanical device as described below in further detail.

The probe body 38 may be configured as or otherwise include a length of stiff, rigid tubing; e.g., a metal tube. The probe body 38 extends longitudinally along a centerline 46 of the probe body 38 from a base end 48 of the probe body 38 to a distal end 50 of the probe body 38. The body base end 48 may also be a longitudinal base end 52 of the inspection probe 28. The probe body 38 of FIG. 1 includes a sidewall 54 that circumscribes and forms a center bore 56 of the probe body 38. The body bore 56 extends longitudinally through the probe body 38, along the body sidewall 54, from the body base end 48 to the body distal end 50. The probe body 38 and its body centerline 46 of FIG. 1 have a straight line geometry. It is contemplated, however, at least a portion of the probe body 38 and its body centerline 46 may alternatively be (e.g., slightly) curved or otherwise bent depending on, for example, a location of the powerplant component 22 within the interior 26 of the aircraft powerplant 24.

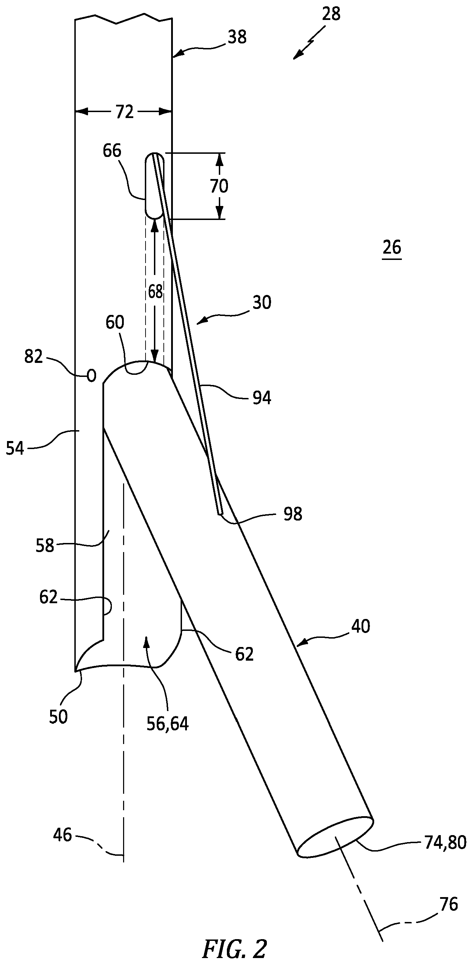

The probe body 38 of FIG. 2 includes a slot 58 in the body sidewall 54 at the body distal end 50. The body slot 58 projects longitudinally into the body sidewall 54 from the body distal end 50 to a longitudinal end 60 of the body slot 58. The body slot 58 extends radially (relative to the body centerline 46) through the body sidewall 54 from an exterior of the probe body 38 to the body bore 56. The body slot 58 extends laterally (e.g., circumferentially) within the body sidewall 54 between laterally opposing sides 62 of the body slot 58. At the body distal end 50, the body bore 56 and the body slot 58 may form a receptacle 64 which receives the probe head 40 as described below in further detail.

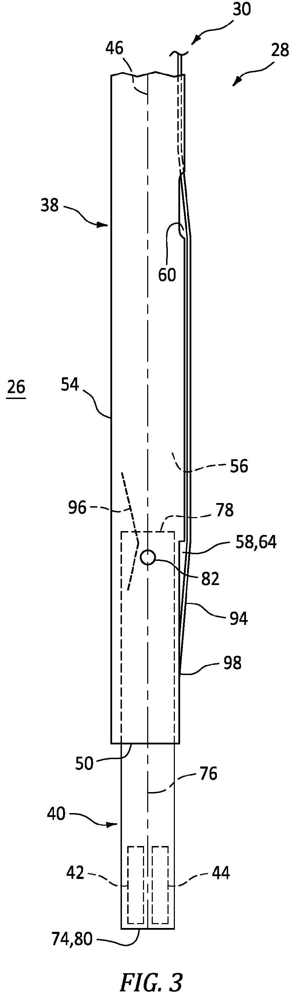

The probe body 38 may also include a port 66 (e.g., an elliptical through-hole) in the body sidewall 54. The body port 66 of FIG. 2 is circumferentially aligned with the body slot 58 about the body centerline 46. The body port 66 is longitudinally spaced from the body slot 58 and its slot end 60 by a longitudinal distance 68. This longitudinal distance 68 may be sized between, for example, one-half times (1/2x) and ten times (10x) a longitudinal size 70 (e.g., a major axis dimension) of the body port 66 to locate the body port 66 longitudinally near the body distal end 50. The longitudinal size 70 of the body port 66 may be sized between, for example, one-quarter times (1/4x) and two times (2x) a lateral width 72 (e.g., a diameter) of the probe body 38. The present disclosure, however, is not limited to such an exemplary arrangement. The body port 66, for example, may alternatively extend longitudinally to the slot end 60. With such an arrangement, a control cable 94 may be housed within an envelope of the probe body 38 when the probe head 40 is in its stowed position; e.g., position of FIG. 3.

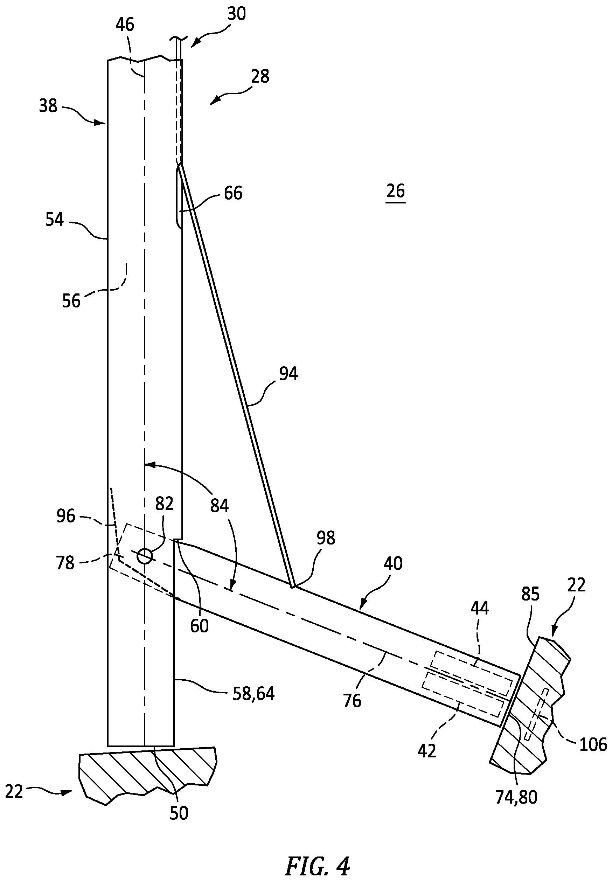

Referring to FIGS. 3 and 4, the probe head 40 is disposed at a longitudinal distal end 74 of the inspection probe 28. The probe head 40 of FIGS. 3 and 4, for example, extends longitudinally along a centerline 76 of the probe head 40 from a base end 78 of the probe head 40 to a distal end 80 of the probe head 40. The head distal end 80 may also be the probe distal end 74.

The probe head 40 is moveably coupled to the probe body 38 at (e.g., on, adjacent or proximate) the body distal end 50. The probe head 40 of FIGS. 3 and 4, for example, is pivotally coupled to probe body 38 through a pin connection 82, which provides a hinge between the probe head 40 and the probe body 38. With this arrangement, the probe head 40 may pivot about a pivot axis of the pin connection 82 relative to the probe body 38 between a stowed position (e.g., see FIG. 3) and a deployed position (e.g., see FIG. 4), as well as optionally various intermediate positions between the stowed position and the deployed position.

In the stowed position of FIG. 3, a base end portion of the probe head 40 at its head base end 78 is disposed in the receptacle 64 and its body bore 56. By contrast, a distal end portion of the probe head 40 at its head distal end 80 projects longitudinally out from the probe body 38 and its body distal end 50 into an environment external to the probe body 38; e.g., the interior 26 of the aircraft powerplant 24. However, in other embodiments, it is contemplated an entirety of the probe head 40 may be disposed in the receptacle 64 and its body bore 56 and, thus, substantially sheathed and protected by the body sidewall 54. The probe head 40 of FIG. 3 is arranged in line with the probe body 38 along the body centerline 46. For example, at least at and/or near the pin connection 82, the head centerline 76 of FIG. 3 is parallel with (or within plus and/or minus two degrees (+/-2°) of parallel with) the body centerline 46. An outer surface of the probe head 40 may radially abut against an inner surface of the body sidewall 54 (e.g., diametrically opposite the body slot 58) thereby providing a stop for the pivoting movement of the probe head 40 in a (e.g., clockwise) direction from the deployed position to the stowed position.

In the deployed position of FIG. 4, the probe head 40 projects longitudinally along its head centerline 76 out from the body bore 56, through the body slot 58, and into the external environment. The probe head 40 of FIG. 4 is angularly offset and cantilevered from the probe body 38. For example, at least at and/or near the pin connection 82, the head centerline 76 of FIG. 4 is angularly offset from the body centerline 46 by an offset angle 84. This offset angle 84 may be a non-zero acute angle equal to or greater than ten or fifteen degrees (10°, 15°). The offset angle 84, for example, may be between fifteen degrees (15°) and thirty degrees (30°), between thirty degrees (30°) and sixty degrees (60°), or greater than sixty degrees (60°). In general, the offset angle 84 is selected based on the location of the powerplant component 22 to be inspected within the interior 26 of the aircraft powerplant 24. However, it may be preferable for the offset angle 84 to be as small as possible to facilitate preloading the probe head 40 against the powerplant component 22 as discussed below in further detail. Referring again to FIG. 4, the base end portion of the probe head 40 may abut against the body sidewall 54 at the slot end 60 and/or the body sidewall 54 at its inner surface thereby providing one or more stops for the pivoting movement of the probe head 40 in a (e.g., counterclockwise) direction from the stowed position to the deployed position.

The vibration actuator 42 and the vibration sensor 44 are each arranged with (e.g., mounted to and/or disposed in) the probe head 40 at the distal end 74, 80. At the distal end 74, 80, the probe head 40 is configured to longitudinally contact, abut against or otherwise engage an exterior surface 85 of the powerplant component 22 at an inspection location for the inspection of the powerplant component 22. Here, one or more of the probe members 42 and/or 44 also directly or indirectly engage the component surface 85 at the distal end 74, 80.

The vibration actuator 42 is configured to induce vibrations in the powerplant component 22 based on a control signal received from the processing system 36. The vibration sensor 44 is configured to measure a vibratory response in the powerplant component 22 excited by the vibrations induced by the vibration actuator 42. The vibration sensor 44 is further configured to provide an output signal or signals to the processing system 36 indicative of the measured vibratory response.

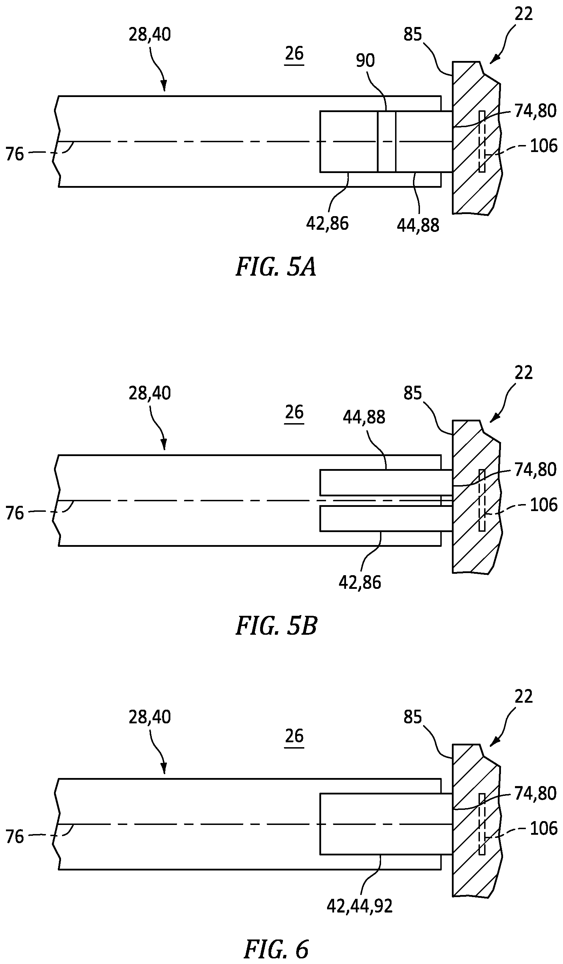

The vibration actuator 42 and the vibration sensor 44 may be configured as or otherwise include one or more piezoelectric devices. For example, referring to FIGS. 5A and 5B, the vibration actuator 42 may be configured as or otherwise include a piezoelectric actuator 86. The vibration sensor 44 may be configured as or otherwise include a piezoelectric sensor 88. The vibration actuator 42, the vibration sensor 44 and their piezoelectric devices 86 and 88 may thereby be respectively configured as discrete elements of the probe head 40. In some embodiments, referring to FIG. 5A, the vibration actuator 42, the vibration sensor 44 and their piezoelectric devices 86 and 88 may be arranged in a stack. The piezoelectric sensor 88 of FIG. 5A, for example, is arranged longitudinally between the piezoelectric actuator 86 and the probe distal end 74. The piezoelectric actuator 86 may thereby longitudinally engage the component surface 85 at the distal end 74, 80 through the piezoelectric sensor 88. Here, the piezoelectric actuator 86 may be separated from the piezoelectric sensor 88 by an electrical isolator 90. In other embodiments, referring to FIG. 5B, the vibration actuator 42 and its piezoelectric actuator 86 and the vibration sensor 44 and its piezoelectric sensor 88 may be arranged to independently longitudinally engage the component surface 85 at the probe distal end 74. The piezoelectric actuator 86 of FIG. 5B, for example, is arranged laterally next to the piezoelectric sensor 88. However, referring to FIG. 6, the vibration actuator 42 and the vibration sensor 44 may alternatively be integrated together into a single piezoelectric device - a piezoelectric transducer 92 which both induces the vibrations and measures the vibratory response.

Examples of the piezoelectric device(s) 86, 88, 92 include, but are not limited to, a piezoelectric stack and a single crystal piezoelectric device. The piezoelectric stack may include a longitudinal stack (or multiple layers) of piezoelectric elements. The single crystal piezoelectric device may include a piezoelectric ceramic element with a single crystal orientation and no grain boundaries. In general, the single crystal piezoelectric device may provide higher power and greater sensitivity than a comparable piezoelectric stack. The present disclosure, however, is not limited to the foregoing exemplary piezoelectric device configurations. Moreover, it is contemplated the vibration actuator 42 may be configured as another type of electromechanical device operable to induce vibrations, and/or the vibration sensor 44 may be configured as another type of electromechanical device operable to measure the vibratory response.

Referring to FIGS. 3 and 4, the actuation system 30 is configured to pivot the probe head 40 between the stowed position of FIG. 3 and the deployed position of FIG. 4, as well as optionally various intermediate positions between the stowed position and the deployed position. The actuation system 30 of FIGS. 3 and 4, for example, includes the control cable 94 (e.g., a spring steel wire) and a spring 96.

The control cable 94 may project from a location outside of the inspection probe 28 into the body bore 56 at the body base end 48 (see FIG. 1). Within the probe body 38 and its body bore 56, the control cable 94 extends longitudinally to the body port 66. At the body port 66, the control cable 94 projects out from the probe body 38 and to the probe head 40. A distal end of the control cable 94 is connected to the probe head 40 at a connection location 98. This connection may be a bonded connection and/or a mechanical connection. The control cable 94, for example, may be welded, brazed or adhered to the probe head 40. In another example, the control cable 94 may be fastened to the probe head 40 using a knot in the control cable 94, a crimp connection, a swage connection or the like. The connection location 98 is disposed between the pin connection 82 and the head distal end 80, and the connection location 98 is longitudinally spaced from the pin connection 82 along the head centerline 76. With this arrangement, the control cable 94 may be pulled (e.g., from a location at or near the body base end 48 and outside of the powerplant interior 26; see FIG. 1) to shorten an exposed / un-guided section of the control cable 94 extending between the probe body 38 and the probe head 40. This pulling of the control cable 94 may thereby pivot the probe head 40 towards the probe body 38 and functionally bend the inspection probe 28 at the pin connection 82. In some embodiments, the control cable 94 may be manually pulled from outside of the aircraft powerplant 24 by a technician. In other embodiments, the control cable 94 may be pulled from outside of the aircraft powerplant 24 by an actuator; e.g., an electric motor, etc. In still other embodiments, the control cable 94 may be pulled through kinematic operation of the preload device 32.

The spring 96 is disposed within the inspection probe 28 at the pin connection 82. This spring 96 is configured to bias the probe head 40 back into its stowed position. More particularly, the spring 96 is configured to bias the probe head 40 in the clockwise direction in FIGS. 3 and 4 about the pivot axis. Examples of the spring 96 include, but are not limited to, a flat spring and a torsion spring. With this arrangement, following the inspection of the powerplant component 22, the control cable 94 may be released and the spring 96 will pivot the probe head 40 back to its stowed position of FIG. 3.

Referring to FIG. 1, the preload device 32 is operatively coupled to the inspection probe 28 and its probe body 38. The preload device 32 is also anchored to a stationary structure 100 (e.g., a casing) of the aircraft powerplant 24 (or another stationary body outside of the aircraft powerplant 24). The preload device 32 is configured to preload the probe head 40 and one or more of its members 42 and/or 44 against the component surface 85 at the inspection location. The preload device 32, for example, may apply a longitudinal force onto the probe body 38 in a direction towards the body distal end 50. The longitudinal force may transfer longitudinally through the probe body 38 and into the probe head 40, thereby pressing the probe head 40 against the component surface 85. The probe head 40 and one or more of its members 42 and/or 44 may thereby be preloaded against the component surface 85. Note, once the probe head 40 is abutted against the component surface 85, the body distal end 50 may be substantially fixed within the interior 26 of the aircraft powerplant 24 thereby facilitating the preload between the probe head 40 and the powerplant component 22. The location of the body distal end 50 may be fixed by anchoring the probe body 38 to the stationary structure 100 of the aircraft powerplant 24 (see FIG. 1). In addition or alternatively, the location of the body distal end 50 may be fixed by engaging (e.g., abutting) the body distal end 50 against another surface of the powerplant component 22 (or another component within the interior 26 of the aircraft powerplant 24).

The processing system 36 is configured in signal communication (e.g., hardwired and/or wirelessly coupled) with the inspection probe 28 and its probe members 42 and/or 44 as well as the display 34. The processing system 36 of FIG. 1 may be in signal communication with the probe members 42 and 44 through one or more (e.g., electrically conductive and/or optical) signal paths extending through the probe body 38 and into the probe head 40. The processing system 36 may be implemented with a combination of hardware and software. The hardware may include memory 102 and at least one processing device 104, which processing device 104 may include one or more single-core and/or multi-core processors. The hardware may also or alternatively include analog and/or digital circuitry other than that described above.

The memory 102 is configured to store software (e.g., program instructions) for execution by the processing device 104, which software execution may control and/or facilitate performance of one or more operations such as those described below. The memory 102 may be a non-transitory computer readable medium. For example, the memory 102 may be configured as or include a volatile memory and/or a nonvolatile memory. Examples of a volatile memory may include a random access memory (RAM) such as a dynamic random access memory (DRAM), a static random access memory (SRAM), a synchronous dynamic random access memory (SDRAM), a video random access memory (VRAM), etc. Examples of a nonvolatile memory may include a read only memory (ROM), an electrically erasable programmable read-only memory (EEPROM), a computer hard drive, etc.

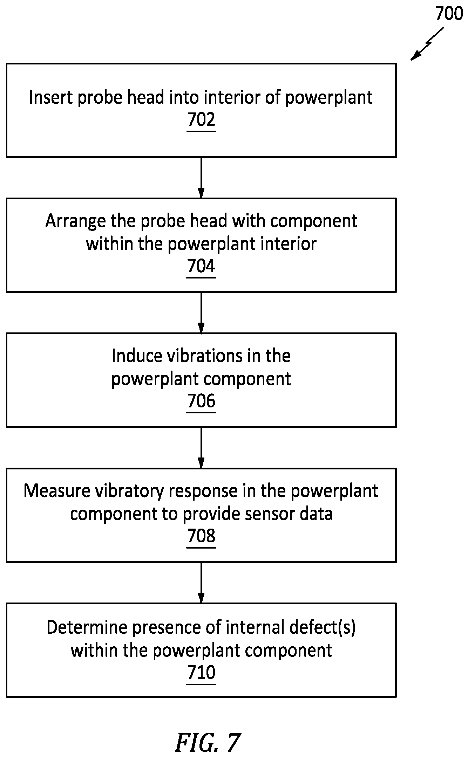

FIG. 7 is a flow diagram of a method 700 for inspecting the powerplant component 22 - a specimen component to be inspected. For ease of description, the inspection method 700 is described below with reference to the inspection system 20 described herein. The powerplant component 22 is also described below as being installed with the aircraft powerplant 24 and disposed within the interior 26 of the aircraft powerplant 24, where the aircraft powerplant 24 remains installed onboard the aircraft. The inspection method 700 of the present disclosure, however, may alternatively be performed with other inspection systems and/or while the aircraft powerplant 24 is removed from the aircraft and/or when the aircraft powerplant 24 is partially disassembled into one or more sub-assemblies.

In step 702, the distal end 74, 80 of the inspection probe 28 is inserted into the interior 26 of the aircraft powerplant 24. To facilitate this insertion, an access cover, a powerplant component and/or the like may be removed from the aircraft powerplant 24 or opened to provide an access port into the interior 26 of the aircraft powerplant 24. The probe distal end 74 may then be passed through the access port into the interior 26 of the aircraft powerplant 24.

In step 704, the probe head 40 is arranged with the powerplant component 22. For example, as the body distal end 50 moves closer to the inspection location, the actuation system 30 may pivot the probe head 40 from its stowed position to its deployed position. Once in the deployed position, the probe head 40 may be abutted against the component surface 85 at the inspection location. The preload device 32 may then exert the longitudinal force onto the probe body 38 to preload the probe head 40 and its members 42 and/or 44 against the component surface 85 at the inspection location. This preload may be equal to or greater than one or two pounds (1-2 lbs) (0.45-0.91 kg); e.g., between one and one-half pounds (1.5 lbs) (0.68 kg) and four and one-half pounds (4.5 lbs) (2.04 kg). The present disclosure, however, is not limited to such an exemplary preload and may change based on actuator and/or sensor specifications. In addition, the foregoing exemplary preload represents a preload between (a) the probe head 40 at the distal end 74, 80 and (b) the component surface 85 at the inspection location. A preload applied by the preload device 32, however, may be greater given the differential angle between the centerlines 46 and 76.

In step 706, vibrations are induced in the powerplant component 22 using the vibration actuator 42 at the inspection location. The processing system 36, for example, may signal the vibration actuator 42 to vibrate (e.g., via a control signal or provision of an electric voltage), and the vibration of the vibration actuator 42 may be transmitted into the powerplant component 22 through the preloaded engagement between the probe head 40 / the vibration actuator 42 and the component surface 85. The vibrations may be induced to sweep across a range of frequencies during the step 706; e.g., a five kilohertz (5 kHz) range, a ten kilohertz (10 kHz) range, a twenty kilohertz (20 kHz) range, one hundred kilohertz (100 kHz), or any other suitable range which will facilitate mapping of a response signature as described below. The vibrations may thereby be induced at multiple different frequencies spanning the frequency range.

In step 708, a vibratory response is measured in the powerplant component 22 using the vibration sensor 44 at the inspection location. This vibratory response is induced by the vibrations transmitted into the powerplant component 22 by the vibration actuator 42. The vibration sensor 44 then generates the sensor data indicative of the measured vibratory response, and provides the sensor data to the processing system 36.

In step 710, the sensor data is processed to determine whether or not the powerplant component 22 includes any internal defects 106 at and/or around the respective inspection location. Herein, the term "defect" may describe a physical anomaly present within a component which may negatively affect a useful life of that component and/or performance of that component. Examples of the internal defect(s) 106 include, but are not limited to, cracks, voids, corrosion, density variations, areas of poor solidification (e.g., sintering) and/or the like.

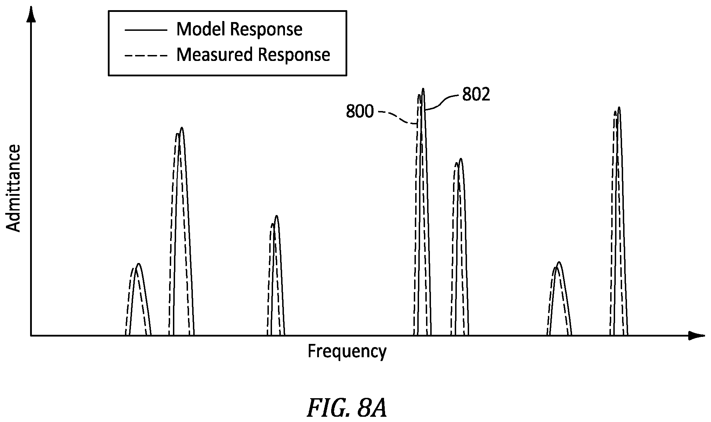

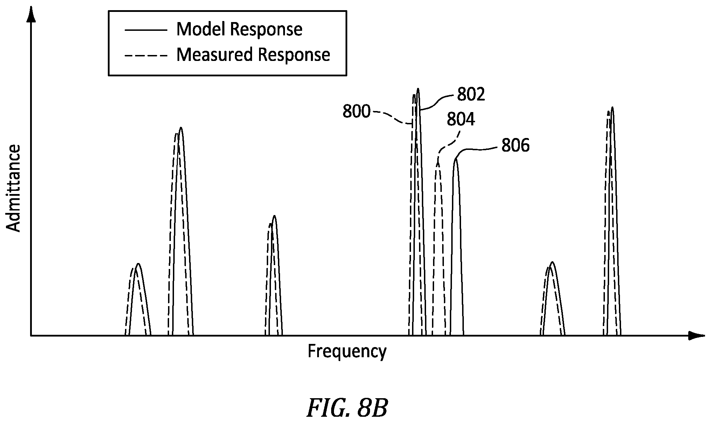

During the step 710, the processing system 36 may analyze the measured vibratory response to determine resonant frequencies and/or other structural mode parameters for the powerplant component 22. Referring to FIG. 8A, where these resonant frequencies (or other structural mode parameters) match (or are within tolerance of) corresponding expected resonant frequencies (or other structural mode parameters) for a model component (e.g., a computer modeled component, a previously inspected component, etc.) without any internal defects, the processing system 36 may determine the powerplant component 22 does not include, or there is a low probability that the powerplant component 22 includes, any internal defects. For example, a measured resonance signature 800 of the measured resonant frequencies in FIG. 8A is the same as, or is within tolerance of, a model resonance signature 802 of expected resonant frequencies for the model component without any internal defects. Note, the matching model and measured responses are shown in FIGS. 8A and 8B slightly laterally offset for clarity of illustration. By contrast referring to FIG. 8B, where one or more of the resonant frequencies and/or other structural mode parameters do not match (or are outside tolerance of) the corresponding expected resonant frequencies and/or other structural mode parameters for the model component without any internal defects, the processing system 36 may determine the powerplant component 22 does include, or there is a high probability that the powerplant component 22 includes, one or more internal defects 106. For example, the resonance signature 800 of the measured resonant frequencies in FIG. 8B includes an outlier resonant frequency 804 which is different than (e.g., does not align with) and is outside of tolerance of a corresponding resonant frequency 806 for the resonance signature 802 of the expected resonant frequencies for the model component without any internal defects. In the foregoing example, the powerplant component 22 and the model component have a common (e.g., the same) configuration and, thus, may share a common manufacturer component identification such as the same part number, the same assembly number, etc. Using this methodology, the inspection method 700 and the inspection system 20 may non-destructively identify presence of internal defect(s) 106 within the powerplant component 22 while that powerplant component 22 remains installed with the aircraft powerplant 24 and/or the aircraft powerplant 24 remains installed onboard the aircraft.

When the step 710 identifies presence of no internal defects in material of the powerplant component 22, information indicative of such may be presented on the display 34. This information may simply identify the presence of no internal defects. The information may also or alternatively indicate the inspected powerplant component 22 meets / is within a component specification (e.g., a design specification) for that powerplant component 22. The aircraft powerplant 24 may then be identified as being ready for continued operation assuming, for example, no other regular scheduled maintenance tasks and/or inspections need to be performed. Similarly, when the step 710 identifies the presence of internal defect(s) 106, information indicative of such may be presented on the display 34. This information may simply identify the presence of internal defects 106. The information may also or alternatively indicate the inspected powerplant component 22 does not meet / is outside of the component specification for that powerplant component 22. Inspection personnel may then take appropriate next steps to further inspect the powerplant component 22 and/or initiate a process for swapping out the aircraft powerplant 24, repairing the powerplant component 22 or replacing the powerplant component 22. While the inspection method 700 is described above identifying whether or not the inspected powerplant component 22 includes any internal defects 106, this inspection method 700 may also (or alternatively) be extended to determine one or more other physical characteristics about the inspected powerplant component 22.

After performing the step 708 or 710, the inspection probe 28 may be removed from the interior 26 of the aircraft powerplant 24. The steps 702 and 704, for example, may be performed in reverse. Alternatively, the inspection probe member(s) 40, 42, 44 may be (e.g., slightly) retracted from the powerplant component 22 and its component surface 85. Thus, when the powerplant component 22 is rotatable (e.g., where the powerplant component 22 is the rotor disk), the powerplant component 22 may be rotated about its rotational axis to facilitate repeating the foregoing inspection method 700 at another inspection location.

In some embodiments, the vibrations induced in the powerplant component 22 during the step 706 may have a frequency equal to or greater than thirty kilohertz (30 kHz); e.g., equal to or greater than forty kilohertz (40 kHz) or fifty kilohertz (50 kHz) up to about two hundred kilohertz (200kHz) or two hundred and fifty kilohertz (250kHz). This frequency may be a lower bound, an upper bound or an intermediate frequency within the range of frequencies swept during the vibration inducement step 706. By vibrating the powerplant component 22 at such a relatively high frequency, the inspection method 700 and/or the inspection system 20 may detect one or more internal defects 106 with a dimension (e.g., a width, a length, etc.) equal to or less than one hundred mils (0.10 inches) (2.54 mm) or one hundred and fifty mils (0.15 inches) (3.81 mm). More particularly, the inspection method 700 and/or the inspection system 20 may detect one or more internal defects 106 with a relatively small dimension equal to or less than fifty mils (0.05 inches) (1.27 mm); e.g., equal to or less than forty mils (0.04 inches) (1.02 mm). Here, the powerplant component 22 is constructed from a metal. It is contemplated, however, the vibrations may alternatively be induced at a frequency below thirty kilohertz (30 kHz) when detecting larger internal defect(s) 106 within the powerplant component 22 and/or when inspecting a powerplant component with another material construction. Moreover, the vibrations may still alternatively be induced at a frequency above two hundred and fifty kilohertz (250kHz) when detecting even smaller internal defect(s) 106 within the powerplant component 22 and/or when inspecting a powerplant component with still another material construction.

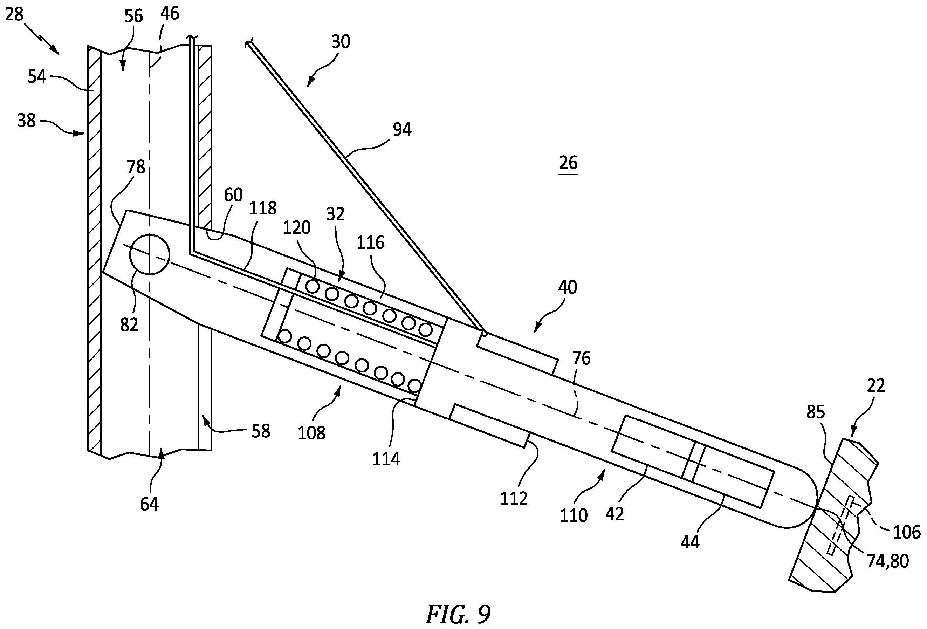

In some embodiments, referring to FIGS. 3 and 4, a longitudinal distance between the pin connection 82 and the distal end 74, 80 may be fixed. In other embodiments, referring to FIGS. 9-11, the longitudinal distance between the pin connection 82 and the distal end 74, 80 may be variable. In addition, the preload device 32 may partially or completely be integrated into the inspection probe 28.

The probe head 40 of FIGS. 9-11 includes a base 108 and an extension 110, where the head extension 110 of FIGS. 9-11 is configured with the vibration actuator 42 and the vibration sensor 44 (schematically shown). The head base 108 extends longitudinally along the head centerline 76 from the head base end 78 to a distal end 112 of the head base 108. The head base 108 is pivotally coupled to the probe body 38 by the pin connection 82. The control cable 94 is connected to the head base 108 at or near its base distal end 112. The head extension 110 extends longitudinally along the head centerline 76 from a base end 114 of the head extension 110 to the distal end 74, 80. At the extension base end 114, the head extension 110 is disposed within an inner bore 116 of the head base 108. The head base 108 and its inner bore 116 may form a guide (e.g., a track) within which the head extension 110 may move. The head extension 110 is thereby configured to translate longitudinally along the head centerline 76 relative to the head base 108. By retracting the head extension 110 further into the head base 108, a size of the probe head 40 is reduced to facilitate pivoting of the probe head 40 within the interior 26 of the aircraft powerplant 24. By contrast, extending the head extension 110 further out of the head base 108 may facilitate the engagement between the probe head 40 and the component surface 85. The extending of the head extension 110 may also facilitate the preloading of the probe head 40 against the component surface 85.

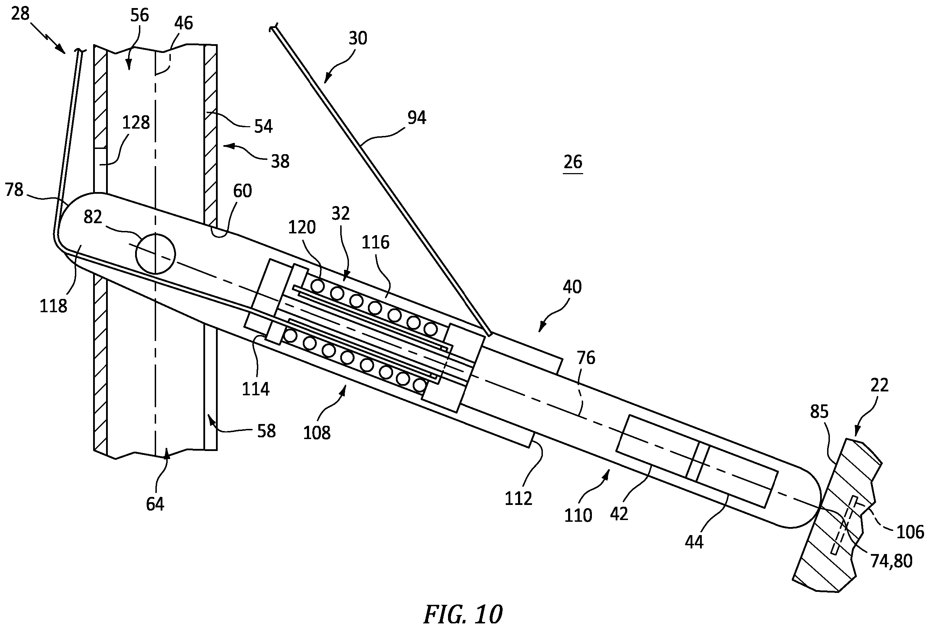

In some embodiments, referring to FIGS. 9 and 10, the actuation system 30 may include an additional control cable 118 and an additional spring 120 (e.g., a coil spring) for actuating the translation of the head extension 110. The control cable 118 of FIG. 9, for example, is configured to pull the head extension 110 towards the pin connection 82 and thereby retract the head extension 110. The spring 120, by contrast, is configured to push the head extension 110 away from the pin connection 82 and thereby extend out the head extension 110 when tension on the control cable 118 is released. In another example, referring to FIG. 10, the control cable 118 is configured to pull the head extension 110 away from the pin connection 82 and thereby extend out the head extension 110. With such an arrangement, by applying a known tension on the control cable 118, a known preload may be applied between the probe head 40 / the head extension 110 and the component surface 85. The spring 120, by contrast, is configured to push the head extension 110 towards the pin connection 82 and thereby retract the head extension 110.

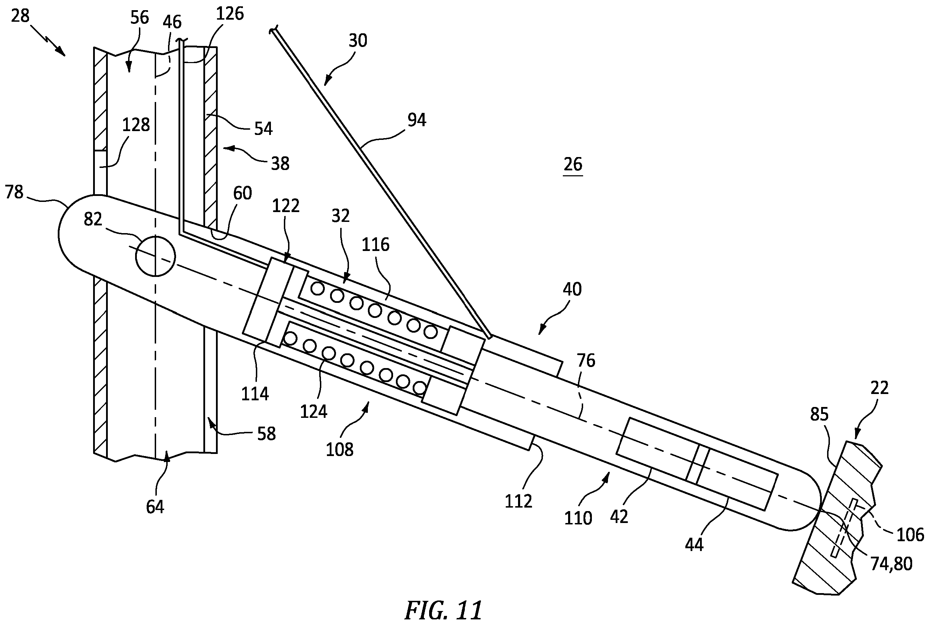

In some embodiments, referring to FIG. 11, the actuation system 30 may include a fluid actuator 122 (e.g., pneumatic or hydraulic piston) and an additional spring 124 (e.g., a coil spring) for actuating the translation of the head extension 110. A fluid line 126, for example, is configured to direct an actuation fluid into or direct the actuation fluid out of an inner chamber of the fluid actuator 122. When the actuation fluid is directed into the fluid actuator 122, the actuation fluid may push the head extension 110 away from the pin connection 82 and thereby extend out the head extension 110. By contrast, when the actuation fluid is directed out of the fluid actuator 122, the spring 124 may push the head extension 110 towards the pin connection 82 and thereby retract the head extension 110. Of course, it is contemplated the operability of the spring 124 and the fluid actuator 122 may be reversed such that the spring 124 may facilitate extend out the head extension 110 whereas the fluid actuator 122 may facilitate retracting the head extension 110.

In some embodiments, referring to FIGS. 10 and 11, the head base 108 may project through another slot 128 in a backside of the body sidewall 54 opposite the body slot 58 when deployed. With this arrangement, the body sidewall 54 may provide another (or an alternatively) stop limiting the pivoting movement of the probe head 40.

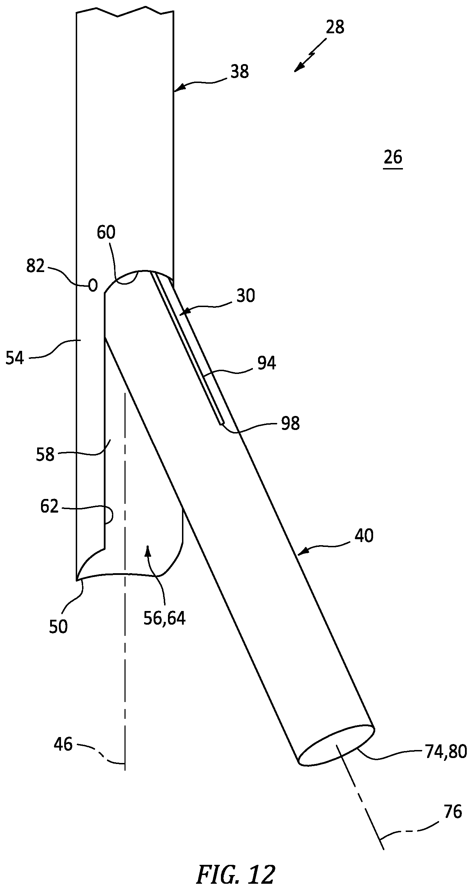

In some embodiments, referring to FIG. 2, the control cable 94 may exit the body bore 56 through the body port 66. In other embodiments, referring to FIG. 12, the control cable 94 may alternatively exit the body bore 56 through the body slot 58.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An inspection method, comprising:
inserting a distal end (50; 74; 80) of an inspection probe (28) into an interior (26) of a powerplant (24), the inspection probe (28) including a body (38) and a head (40) pivotally connected to the body (38), the head (40) comprising an actuator (42; 86; 92) and disposed at the distal end (50; 74; 80) of the inspection probe (28), and the powerplant (24) including a component (22) within the interior (26) of the powerplant (24);
arranging the head (40) with the component (22), the arranging comprising pivoting the head (40) relative to the body (38) and abutting the head (40) against a surface (85) of the component (22);
inducing vibrations in the component (22) using the actuator (42; 86; 92); and
measuring a vibratory response in the component (22) excited by the vibrations using a sensor (44; 88; 92) to provide sensor data.

2. The inspection method of claim 1, wherein a centerline (76) of the head (40) is angularly offset from a centerline (46) of the body (38) by an offset angle (84) following the pivoting, the offset angle (84) equal to or greater than fifteen degrees.

3. The inspection method of claim 2, wherein the centerline (76) of the head (40) is at least within two degrees of parallel of the centerline (46) of the body (38) during the inserting.

4. The inspection method of any preceding claim, wherein:
the head (40) includes a base (108) and an extension (110), the base (108) is pivotally coupled to the body (38), and the extension (110) comprises the actuator (42; 86; 92); and
the arranging further comprises translating the extension (110) relative to the base (108) to abut the extension (110) against the surface (85) of the component (22),
optionally wherein the extension (110) further comprises the sensor (44; 88; 92).

5. The inspection method of any preceding claim, wherein the head (40) further comprises the sensor (44; 88; 92).

6. The inspection method of any preceding claim, wherein the arranging further comprises preloading the head (40) against the surface (85) of the component (22).

7. The inspection method of any preceding claim, further comprising abutting a distal end (50) of the body (38) against the component (22) or another component within the interior (26) of the powerplant (24) while a distal end (74; 80) of the head (40) is abutted against the surface (85) of the component (22).

8. The inspection method of any preceding claim, further comprising detecting a defect (106) internal to the component (22) using the sensor data.

9. The inspection method of any preceding claim, further comprising, following the measuring, disengaging the head (40) against the surface (85) of the component (22) and pivoting the head (40) into alignment with the body (38).

10. The inspection method of any preceding claim, wherein the powerplant (24) comprises a turbine engine (24); and/or, wherein the component (22) is configured as a rotor disk (22).

11. The inspection method of any preceding claim, wherein the powerplant (24) is installed with an aircraft during the inserting, the arranging, the inducing and the measuring.

12. An apparatus (20) for inspection of a component (22), comprising:
an inspection probe (28) including a tubular body (38), a head (40) and an actuation system (30);
the head (40) disposed at a distal end (50; 74; 80) of the inspection probe (28) and pivotally coupled to the tubular body (38), the head (40) configured to pivot between a stowed position and a deployed position where the head (40) is inline with the tubular body (38) when in the stowed position and the head (40) is angularly offset from the tubular body (38) when in the deployed position, the head (40) including an actuator (42; 86; 92) and a sensor (44; 88; 92), the actuator (42; 88; 92) configured to induce vibrations in the component (22) when the head (40) is in the deployed position and the head (40) is abutted against a surface (85) of the component (22), and the sensor (44; 88; 92) configured to measure a vibratory response in the component (22) excited by the vibrations to provide sensor data; and
the actuation system (30) configured to pivot the head (40) between the stowed position and the deployed position.

13. The apparatus of claim 12, further comprising a processing system (36) configured to determine a characteristic of the component (22) based on the sensor data.

14. The apparatus of claim 12 or 13, wherein:
the head (40) includes a base (108) and an extension (110);
the base (108) is pivotally coupled to the body (38);
the extension (110) includes the actuator (42; 86; 92) and the sensor (44; 88; 92); and
the actuation system (30) is further configured to translate the extension (110) longitudinally along the base (108) and away from the tubular body (38) when the head (40) is in the deployed position.

15. The apparatus of any of claims 12 to 14, wherein the actuation system (30) comprises one or more of:
a spring (96; 120; 124) within the inspection probe (28);
a control cable (94; 118) operatively coupled to the head (40); and
a fluid actuator (122) within the inspection probe (28).
